# EUROPEAN PATENT APPLICATION

(11) **EP 4 644 112 A1**
(43) Date of publication of application: **05.11.2025**
(21) Application number: 23911328.5
(22) Date of filing: 12.10.2023
(51) Int. Cl.: B32B 5/28, B32B 7/027, H01M 10/658

(54) **LAMINATE**

(30) Priority: 28.12.2022 JP 2022211215
(71) Applicant: Sekisui Chemical Co., Ltd., Osaka-shi, Osaka 530-0047 (JP)
(72) Inventor: MOCHIZUKI, Hiroaki, Shunan-shi, Yamaguchi 746-0006 (JP); SAWAI, Takuya, Shunan-shi, Yamaguchi 746-0006 (JP); MATSUMURA, Kenichi, Shunan-shi, Yamaguchi 746-0006 (JP)
(74) Representative: Cabinet Beau de Loménie
(86) International application number: PCT/JP2023/037029
(87) International publication number: WO 2024/142544

(57) **Abstract**

The present invention provides a laminate that excels in elasticity as well as in both heat shielding performance and flame shielding performance in combustion and, in particular, is capable of blocking heat and flame transfer to adjacent battery cells to prevent chain explosion in the event of ignition or thermal runaway, when it is used as an inter-cell member for in-vehicle batteries. The laminate of the present invention includes an A layer including a resin and a fiber and a B layer, the laminate including a total of three or more layers of the A layer and the B layer, the laminate having no flame penetration in two-minute exposure to burner flame and being rated as V-0 or greater in a UL94 burning test.

## Description

### TECHNICAL FIELD

The present invention relates to laminates.

### BACKGROUND ART

In recent years, a demand for longer driving ranges of electric vehicles has been increasing. To meet this demand, dense packaging of various batteries such as lithium-ion batteries is investigated. In the dense packaging, since batteries may repeatedly expand and contract or generate heat in use, heat insulation buffer materials are placed between battery cells.

For example, Patent Literature 1 discloses a heat insulating material for a battery, including a heat insulation portion and a buffer portion which is easier to compress and deform than the insulation portion. Patent Literature 1 describes that the insulation portion may include a porous body, a compression-molded powder body, or a fibrous body, and the buffer portion may include a fibrous body, an elastomer molded body, or a metal spring.

Patent Literature 2 describes use of an inorganic heat insulating material having a porous structure as an insulator disposed between battery cells and also describes that the porous structure includes a binder such as polypropylene carbonate.

Patent Literatures 3 and 4 describe a composite insulating material having a structure in which a base material consisting of an aggregate of inorganic fibers is integrated with a support material consisting of an inorganic material to suppress deformation of the base material.

### CITATION LIST

### - Patent Literature

Patent Literature 1: JP 2021-140968 A
Patent Literature 2: JP 7146848 B
Patent Literature 3: JP 2022-59782 A
Patent Literature 4: JP 2022-59783 A

### SUMMARY OF INVENTION

### - Technical problem

Various batteries such as lithium-ion batteries are at risk of thermal runaway and ignition due to defects such as internal short circuits. In particular, an impact of an accident, for example, may cause thermal runaway and ignition of in-vehicles batteries. In such a case, there is a risk of a phenomenon called chain explosion, in which flame ignited together with hot inorganic particles reach adjacent battery cells and cause ignition. Unfortunately, the components described in Patent Literatures 1 to 4 cannot prevent chain explosion. Thus, a demand exists for a component that has sufficient elasticity to follow expansion and contraction of battery cells and also excels in heat shielding performance and flame shielding performance in combustion.

The present invention aims to provide a laminate that excels in elasticity as well as in both heat shielding performance and flame shielding performance in combustion and, in particular, is capable of blocking heat and flame transfer to adjacent battery cells to prevent chain explosion in the event of ignition or thermal runaway, when it is used as an inter-cell member for in-vehicle batteries.

### - Solution to problem

The disclosure (1) relates to a laminate, including: an A layer including a resin and a fiber; and a B layer, the laminate including a total of three or more layers of the A layer and the B layer, the laminate having no flame penetration in two-minute exposure to burner flame and being rated as V-0 or greater in a UL94 burning test.

The disclosure (2) relates to the laminate according to the disclosure (1), wherein the B layer has a stress at 20% compression of 0.01 MPa or more and 5.00 MPa or less in a compression test.

The disclosure (3) relates to the laminate according to the disclosure (1) or (2), wherein the B layer has a thermal conductivity of 0.1 W/mK or less as measured in conformity with JIS A 1412-2.

The disclosure (4) relates to the laminate according to any one of the disclosures (1) to (3), wherein the B layer includes at least one selected from the group consisting of resin foams, inorganic foams, and fibers.

The disclosure (5) relates to the laminate according to any one of the disclosures (1) to (4), wherein the resin constituting the A layer is a thermoplastic resin.

The disclosure (6) relates to the laminate according to the disclosure (5), wherein the thermoplastic resin includes at least one selected from the group consisting of chlorinated polyvinyl chloride resins and polyvinyl chloride resins.

The disclosure (7) relates to the laminate according to any one of the disclosures (1) to (6), wherein the A layer further includes an inorganic filler.

The disclosure (8) relates to the laminate according to the disclosure (7), wherein the inorganic filler is aluminum hydroxide.

The present invention is described in detail below.

As a result of intensive studies, the present inventors found that a laminate including a total of three or more layers of an A layer including a resin and a fiber and a B layer, having no flame penetration in two-minute exposure to burner flame, and being rated as V-0 or greater in a UL94 burning test excels in both heat shielding performance and flame shielding performance while exhibiting sufficient elasticity. The present inventors thus completed the present invention.

Here, the term "heat shielding performance" means heat blocking properties, such as an ability to prevent transfer of heat from, for example, abnormally heated battery cells to adjacent battery cells. The term "flame shielding performance" means flame blocking properties, such as an ability to prevent transfer of flame from ignited battery cells to adjacent battery cells.

The laminate includes an A layer including a resin and a fiber.

The A layer therein can protect the B layer and allows the laminate to maintain its form for a long time.

The A layer contains a resin.

Examples of the resin include synthetic resins such as thermoplastic resins and thermosetting resins, and elastomers.

Examples of the thermoplastic resins include halogen-containing resins such as chlorinated polyvinyl chloride resins (CPVC) and polyvinyl chloride resins (PVC), polyolefins such as polyethylene and polypropylene, polystyrene (PS), acrylonitrile-styrene copolymers (AS resins), acrylonitrile-butadiene-styrene copolymers (ABS resins), acrylic resins such as polymethyl methacrylate, polyamides, polycarbonates, polysulfone (PSU resin), polyphenylsulfone (PPSU), polyethersulfone (PES resin), polyetherimide (PEI resin), polyphenylene sulfide (PPS resin), polyester resins such as polyethylene terephthalate and polybutylene terephthalate, polyacetals, polyimides, polyphenylene ether, polyether ether ketone, and liquid crystal polymers. Preferred among these are halogen-containing resins, polycarbonates, and polyamides. More preferred are chlorinated polyvinyl chloride resins and polyvinyl chloride resins. Still more preferred are chlorinated polyvinyl chloride resins.

Examples of the thermosetting resins include polyurethanes, phenolic resins, epoxy resins, urea resins, melamine resins, silicone resins, unsaturated polyester resins, alkyd resins, and thermosetting polyimides.

Examples of the elastomers include thermoplastic elastomers such as olefin-based elastomers, styrene-based elastomers, ester-based elastomers, amide-based elastomers, and vinyl chloride-based elastomers.

The above resins may be used alone or in combination of two or more thereof.

In view of easy moldability, thermoplastic resins are preferred, and chlorinated polyvinyl chloride resins or polyvinyl chloride resins are more preferred.

The resin may be crosslinked or modified as long as the effects of the present invention are not impaired.

Examples of the crosslinking method include crosslinking methods typically used for the above resin components, such as crosslinking methods using various crosslinking agents or peroxides and crosslinking methods involving electron ray irradiation.

The resin preferably has a loss on heating at 400°C of 30% by mass or more and 80% by mass or less.

When the loss on heating is within the range, a strength decrease can be sufficiently reduced while the loss of the resin due to heat is reduced.

The loss on heating is more preferably 50% by mass or more and 75% by mass or less.

The loss on heating can be measured using a thermogravimetry (TG) device, for example.

In the resin, the time required for the loss on heating at 400°C to reach 50% by mass is preferably 10 seconds or longer, more preferably 30 seconds or longer and preferably 20 minutes or shorter, more preferably 15 minutes or shorter.

The time required for the loss on heating to reach 50% by mass can be confirmed using a thermogravimetry (TG) device, for example.

The resin preferably has an oxygen index of 20 or greater.

When the oxygen index is 20 or greater, the resin can exhibit excellent flame shielding performance.

The oxygen index is more preferably 22 or greater and is preferably 90 or less, more preferably 70 or less.

The oxygen index is the minimum concentration (% by volume) of oxygen necessary to sustain combustion of a material. It can be determined by a method in conformity with JIS K 7201-2:2007 or ASTM D2863, for example.

The resin preferably has a weight average molecular weight (Mw) of 1,000 to 1,000,000, more preferably 50,000 to 200,000.

Thermosetting resins are preferably crosslinked to such an extent that they do not flow when heated, but the extent of crosslinking is not limited to the extent.

The resin preferably has a number average molecular weight (Mn) of 35,000 or greater and 90,000 or less.

The weight average molecular weight (Mw) and the number average molecular weight (Mn) are polystyrene-equivalent average molecular weights and can be obtained by GPC using a column LF-804 (produced by Showa Denko K.K.), for example. For polyamides, polymethyl methacrylate (PMMA)-equivalent average molecular weights are preferred.

The resin preferably has a glass transition temperature of 0°C or higher, more preferably 20°C or higher, still more preferably 40°C or higher, and preferably 300°C or lower, more preferably 250°C or lower, still more preferably 200°C or lower.

The glass transition temperature can be measured in conformity with JIS K 7121, for example.

When the resin contains a chlorinated polyvinyl chloride resin, the chlorinated polyvinyl chloride resin preferably has a chlorine content of 57% by mass or more, more preferably 60% by mass or more, and preferably 72% by mass or less, more preferably 71% by mass or less.

The chlorine content can be measured by a method in conformity with JIS K 7229.

The chlorinated polyvinyl chloride resin preferably has an average degree of polymerization of 400 or more, more preferably 500 or more, and preferably 3,000 or less, more preferably 2,000 or less.

When the average degree of polymerization is within the range, thermally decomposed products of the resin are less likely to disperse in combustion, so that a strength decrease can be reduced.

The average degree of polymerization can be measured by a method in conformity with JIS K 6720-2:1999, for example.

The chlorinated polyvinyl chloride resin includes a vinyl chloride unit and a perchlorinated unit.

The vinyl chloride unit refers to a structural unit derived from a polyvinyl chloride resin before it is chlorinated. The perchlorinated unit refers to a structural unit newly formed through chlorination.

The chlorinated polyvinyl chloride resin has a vinyl chloride unit content of preferably 7.0 mol% or higher, more preferably 32.0 mol% or higher, and preferably 92.0 mol% or lower, more preferably 62.0 mol% or lower.

Examples of the vinyl chloride unit include a structural unit represented by the following formula (a) and a structural unit represented by the following formula (b) .

The vinyl chloride unit content refers to an amount contained in the entire chlorinated polyvinyl chloride resin.

Further, the content of the structural unit represented by the following formula (b) contained in the entire chlorinated polyvinyl chloride resin is preferably 0.001 mol% or higher, more preferably 0.01 mol% or higher and is preferably 1.0 mol% or lower, more preferably 0.5 mol% or lower.
[Chem. 1]

-CH₂-CHCl- (a)

-CH=CCl- (b)

The chlorinated polyvinyl chloride resin has a perchlorinated unit content of preferably 23.0 mol% or higher, more preferably 33.0 mol% or higher, and preferably 65.0 mol% or lower, more preferably 60.0 mol% or lower.

Examples of the perchlorinated unit include a structural unit represented by the following formula (c), a structural unit represented by the following formula (d), and a structural unit represented by the following formula (e).

The perchlorinated unit content refers to an amount contained in the entire chlorinated polyvinyl chloride resin.

Further, the content of the structural unit represented by the following formula (e) contained in the entire chlorinated polyvinyl chloride resin is preferably 0.001 mol% or higher, more preferably 0.01 mol% or higher and is preferably 1.0 mol% or lower, more preferably 0.5 mol% or lower.
[Chem. 2]

-CH₂-CCl₂- (c)

-CHCl-CHCl- (d)

-CCl=CCl- (e)

The chlorinated polyvinyl chloride resin may contain a different structural unit other than the vinyl chloride unit and the perchlorinated unit.

The different structural unit content is preferably 0.01 mol% or higher and is preferably 25 mol% or lower, more preferably 15 mol% or lower, still more preferably lower than 10 mol%.

Examples of the different structural unit include a structural unit represented by the following formula (f), a structural unit represented by the following formula (g), and a structural unit represented by the following formula (h). Here, X in the formula (f) represents a hydrogen atom or a chlorine atom. The formula (h) is a terminal structure.
[Chem. 3]

-CX₂-(C=O)- (f)

-CH(CH₂Cl)- (g)

-CH₂-Cl (h)

The vinyl chloride unit content, the perchlorinated unit content, and the different structural unit content of the chlorinated polyvinyl chloride resin can be measured by molecular structure analysis using NMR. The NMR analysis can be performed in conformity with the method described in R. A. Komoroski, R. G. Parker, J. P. Shocker, Macromolecules, 1985, 18, 1257-1265.

The chlorinated polyvinyl chloride resin is a resin obtained by chlorinating a polyvinyl chloride resin (PVC).

Examples of the polyvinyl chloride resin include a vinyl chloride homopolymer, a copolymer of a vinyl chloride monomer and a monomer with unsaturated bond(s) that is copolymerizable with the vinyl chloride monomer, and a graft copolymer obtained by grafting a vinyl chloride monomer to a polymer. These polymers may be used alone or in combination of two or more thereof.

Examples of the monomer with unsaturated bond(s) that is copolymerizable with the vinyl chloride monomer include α-olefins, vinyl esters, vinyl ethers, (meth)acrylates, aromatic vinyls, vinyl halides, and N-substituted maleimides. These monomers may be used alone or in combination of two or more thereof.

Examples of the α-olefins include ethylene, propylene, and butylene.

Examples of the vinyl esters include vinyl acetate and vinyl propionate.

Examples of the vinyl ethers include butyl vinyl ether and cetyl vinyl ether.

Examples of the (meth)acrylates include methyl (meth)acrylate, ethyl (meth)acrylate, butyl acrylate, and phenyl methacrylate.

Examples of the aromatic vinyls include styrene and α-methyl styrene.

Examples of the vinyl halides include vinylidene chloride and vinylidene fluoride.

Examples of the N-substituted maleimides include N-phenyl maleimide and N-cyclohexyl maleimide.

The polymer to which vinyl chloride is graft copolymerized is not limited as long as vinyl chloride can be graft polymerized. Examples of such a polymer include ethylene copolymers, acrylonitrile-butadiene copolymers, polyurethane, chlorinated polyethylene, and chlorinated polypropylene. These may be used alone or in combination of two or more thereof.

Examples of the ethylene copolymers include ethylene-vinyl acetate copolymers, ethylene-vinyl acetate-carbon monoxide copolymers, ethylene-ethyl acrylate copolymers, ethylene-butyl acrylate-carbon monoxide copolymers, ethylene-methyl methacrylate copolymers, and ethylenepropylene copolymers.

The average degree of polymerization of the PVC is preferably a typical average degree of polymerization of 400 to 3,000, more preferably 600 to 2,000. The average degree of polymerization can be measured by a method specified in JIS K 6720-2:1999.

The method for polymerizing the PVC is not limited. A conventionally known method can be used such as aqueous suspension polymerization, bulk polymerization, solution polymerization, or emulsion polymerization.

The amount of the resin in the A layer is preferably 10% by mass or more, more preferably 20% by mass or more, still more preferably 25% by mass or more and is preferably 80% by mass or less, more preferably 75% by mass or less, still more preferably 70% by mass or less.

The amount of the resin in the A layer is preferably 20% by volume or more, more preferably 25% by volume or more, still more preferably 30% by volume or more and is preferably 80% by volume or less, more preferably 75% by volume or less, still more preferably 70% by volume or less.

The amount of the resin constituting the A layer in the laminate is preferably 25% by mass or more, more preferably 30% by mass or more, still more preferably 35% by mass or more and is preferably 75% by mass or less, more preferably 70% by mass or less, still more preferably 65% by mass or less.

The amount of the resin constituting the A layer in the laminate is preferably 15% by volume or more, more preferably 20% by volume or more, still more preferably 25% by volume or more and is preferably 75% by volume or less, more preferably 70% by volume or less, still more preferably 65% by volume or less.

The A layer includes a fiber.

Examples of the fiber include reinforcing fibers such as carbon fibers, metal fibers, organic fibers, and inorganic fibers.

Examples of the carbon fibers include PAN carbon fibers, pitch carbon fibers, cellulose carbon fibers, and vapor-grown carbon fibers.

Examples of the metal fibers include fibers made of metals such as iron, gold, silver, copper, aluminum, brass, and stainless steel.

Examples of the organic fibers include fibers made of organic materials such as aramids, polybenzoxazole (PBO), polyphenylene sulfide, polyesters, polyamides, and polyethylene.

Examples of the inorganic fibers include fibers made of inorganic materials such as glass, basalt, silicon carbide, and silicon nitride. Examples of the glass fibers include E glass, C glass, S glass, and T glass.

In particular, in view of the strength after combustion, the fiber is preferably at least one selected from the group consisting of a carbon fiber and an inorganic fiber, more preferably at least one selected from the group consisting of a carbon fiber and a glass fiber.

The fiber preferably has an average fiber size of 2 µm or greater, more preferably 3 µm or greater, and preferably 30 µm or less, more preferably 26 µm or less.

The fiber may be a discontinuous fiber that is intermittently divided or may be a continuous fiber that is not divided.

When the fiber is discontinuous fiber, the fiber preferably has an average fiber length of 2 mm or greater, more preferably 4 mm or greater, and preferably 100 mm or less, more preferably 80 mm or less.

The fiber preferably has a specific gravity of 1.5 or greater, more preferably 1.7 or greater, still more preferably 2.0 or greater, and preferably 3.0 or less, more preferably 2.7 or less, still more preferably 2.6 or less.

The specific gravity can be measured with an electronic densimeter, for example.

Examples of the form of the fiber include a fibrous form and a form of a sheet of woven fabric, knitted fabric, or non-woven fabric.

When the fiber is in a sheet form, the fiber preferably has a weight per unit area of 100 g/m² or more, more preferably 350 g/m² or more, and preferably 1,000 g/m² or less, more preferably 650 g/m² or less.

When the fiber is in a sheet form, preferably 3 or more, more preferably 5 or more but preferably 15 or fewer, more preferably 10 or fewer layers of the fiber are laminated to ensure the strength.

The amount of the fiber in the A layer is preferably 10% by mass or more, more preferably 20% by mass or more, still more preferably 25% by mass or more and is preferably 80% by mass or less, more preferably 75% by mass or less, still more preferably 70% by mass or less.

When the amount of the fiber is within the range, the laminate can have sufficiently high mechanical strength.

The amount of the fiber in the A layer is preferably 20% by volume or more, more preferably 25% by volume or more, still more preferably 30% by volume or more and is preferably 80% by volume or less, more preferably 75% by volume or less, still more preferably 70% by volume or less.

When the amount of the fiber is within the range, the laminate can have sufficiently high mechanical strength.

The amount of the fiber in the A layer is preferably 40 parts by mass or more, more preferably 50 parts by mass or more, still more preferably 70 parts by mass or more and is preferably 200 parts by mass or less, more preferably 190 parts by mass or less, still more preferably 170 parts by mass or less, relative to 100 parts by mass of the resin.

The amount of the fiber in the laminate is preferably 20% by mass or more, more preferably 25% by mass or more and is preferably 70% by mass or less, more preferably 65% by mass or less.

The amount of the fiber in the laminate is preferably 15% by volume or more, more preferably 20% by volume or more, still more preferably 25% by volume or more and is preferably 75% by volume or less, more preferably 70% by volume or less, still more preferably 65% by volume or less.

The A layer may further include, in addition to the resin and the fiber, additives such as stabilizers, lubricants, inorganic fillers, pigments, flame retardants, antioxidants, processing aids, ultraviolet absorbers, or light stabilizers, if necessary. Of these, in view of improved mechanical strength, suppressed heat conduction, flame shielding performance, flame retardancy, and insulation resistance, the A layer preferably includes an inorganic filler.

Examples of the stabilizers include thermal stabilizers and thermal stabilization aids. Examples of the thermal stabilizers include organotin-based thermal stabilizers, lead-based thermal stabilizers, calcium-zinc-based thermal stabilizers, barium-zinc-based thermal stabilizers, and barium-cadmium-based thermal stabilizers.

Examples of the organotin-based thermal stabilizers include dibutyl tin mercapto, dioctyl tin mercapto, dimethyl tin mercapto, dibutyl tin mercapto, dibutyl tin maleate, dibutyl tin maleate polymers, dioctyl tin maleate, dioctyl tin maleate polymers, dibutyl tin laurate, and dibutyl tin laurate polymers.

Examples of the lead-based thermal stabilizers include lead stearate, dibasic lead phosphite, and tribasic lead sulfate. These may be used alone or in combination of two or more thereof.

Examples of the thermal stabilization aids include epoxidized soybean oil, phosphates, polyols, hydrotalcite, and zeolite. These may be used alone or in combination of two or more thereof.

The amount of the stabilizers in the A layer relative to 100 parts by mass of the resin is preferably 0.5 parts by mass or more, more preferably 1 part by mass or more and is preferably 15 parts by mass or less, more preferably 10 parts by mass or less.

Examples of the lubricants include internal lubricants and external lubricants.

Internal lubricants are used to reduce the fluid viscosity of the molten resin in molding to prevent the generation of frictional heat. Examples of the internal lubricants include butyl stearate, lauryl alcohol, stearyl alcohol, epoxidized soybean oil, glycerol monostearate, stearic acid, and bisamide. These may be used alone or in combination of two or more thereof.

External lubricants are used to improve the slip effect between the molten resin and metal surfaces in molding. Examples of the external lubricants include paraffin wax, polyolefin waxes, ester waxes, and montanic acid wax. These may be used alone or in combination of two or more thereof.

Examples of the inorganic fillers include metal hydroxides such as aluminum hydroxide, carbonates such as calcium carbonate, and inorganic minerals such as talc. Of these, in view of endothermic action, metal hydroxides are preferred, and aluminum hydroxide is more preferred.

The amount of the inorganic fillers in the A layer relative to 100 parts by mass of the resin is preferably 30 parts by mass or more, more preferably 100 parts by mass or more and is preferably 900 parts by mass or less, more preferably 700 parts by mass or less.

Examples of the pigments include organic pigments such as azo-based pigments, phthalocyanine-based pigments, threne-based pigments, and dye lake-based pigments; and inorganic pigments such as oxide-based pigments, chromate molybdate-based pigments, sulfide/selenide-based pigments, and ferrocyanide-based pigments.

Examples of the antioxidants include phenolic antioxidants.

Examples of the light stabilizers include hindered amine-based light stabilizers.

Examples of the processing aids include acrylic processing aids such as alkyl acrylate-alkyl methacrylate copolymers having a mass average molecular weight of 100,000 to 2,000,000. Examples of the acrylic processing aids include n-butyl acrylate-methyl methacrylate copolymers and 2-ethylhexyl acrylate-methyl methacrylate-butyl methacrylate copolymers. These may be used alone or in combination of two or more thereof.

Examples of the ultraviolet absorbents include salicylate-based ultraviolet absorbents, benzophenone-based ultraviolet absorbents, benzotriazole-based ultraviolet absorbents, and cyanoacrylate-based ultraviolet absorbents.

The thickness of the A layer is preferably 0.05 mm or greater, more preferably 0.2 mm or greater, still more preferably 0.4 mm or greater and is preferably 10 mm or less, more preferably 7 mm or less, still more preferably 5 mm or less.

When the laminate includes two or more A layers, the "thickness of the A layer" means the total thickness of the A layers.

The proportion, by mass, of the A layer in the laminate is preferably 1/10 or greater, more preferably 2/10 or greater and is preferably 9/10 or less, more preferably 8/10 or less.

The proportion of the thickness of the A layer in the thickness of the laminate is preferably 1/10 or greater, more preferably 2/10 or greater and is preferably 9/10 or less, more preferably 8/10 or less.

The A layer preferably has a bending modulus of 10 GPa or greater, more preferably 15 GPa or greater, still more preferably 17 GPa or greater, and preferably 100 GPa or less, more preferably 50 GPa or less, still more preferably 30 GPa or less.

When the bending modulus is within the range, the laminate used as an inter-cell member of batteries can exhibit sufficient mechanical strength to reduce damage and the like due to a collision accident.

The bending modulus can be measured by the method described later in the examples.

### (B layer)

The laminate includes a B layer.

The B layer therein can absorb strain from cell expansion and contraction during charge and discharge when the laminate is used as an inter-cell member for in-vehicle batteries, whereby cell durability can be improved.

Examples of the material constituting the B layer include foams such as resin foams and inorganic foams, and fibers.

Examples of the resin constituting the resin foams include polyolefin-based resins such as polyethylene-based resins and polypropylene-based resins, polyester-based resins, polyurethane-based resins, polyvinyl chloride resins, chlorinated polyvinyl chloride resins, phenolic resins, and thermoplastic elastomers.

Examples of the polyethylene-based resins include low-density polyethylene, medium-density polyethylene, high-density polyethylene, and linear low-density polyethylene.

Examples of the polypropylene-based resins include homopolypropylene and copolymers of propylene and other olefins. The copolymers of propylene and other olefins may be block copolymers, random copolymers, or random block copolymers. Examples of the olefins that are copolymerized with propylene include ethylene, 1-butene, 1-pentene, 4-methyl-1-pentene, 1-hexene, 1-octene, 1-nonene, 1-decene, and other α-olefins.

Examples of the polyester-based resins include polyethylene terephthalate (PET) and polyethylene naphthalate (PEN).

Examples of the polyurethane-based resins include polyester-based polyurethane resins, polyether-based polyurethane resins, and polycarbonate-based polyurethane resins.

Of these, polyethylene-based resins, polyester-based resins, and polyurethane-based resins are preferred, and polyester-based polyurethane resins, polyether-based polyurethane resins, and polycarbonate-based polyurethane resins are more preferred.

When the resin constituting the resin foams is a chlorinated polyvinyl chloride resin, the structure of the chlorinated polyvinyl chloride resin may be the same as or similar to that of the chlorinated polyvinyl chloride resin constituting the A layer.

Examples of the inorganic foams include glass balloons, shirasu balloons, fly ash balloons, silica balloons, perlite, vermiculite, granular foamed silica, ceramic balloons, and aerogel structures.

The foams may be closed-cell foams or open-cell foams.

An exemplary method for obtaining the foams includes mixing the raw materials of the foams with a foaming agent to cause foaming.

The foaming agent may be a chemical foaming agent or a physical foaming agent.

Examples of the chemical foaming agent include thermally decomposable inorganic foaming agents, thermally decomposable organic foaming agents, inorganic reactive foaming agents based on sodium bicarbonate and acid, and organic reactive foaming agents based on isocyanate and water.

Examples of the thermally decomposable inorganic foaming agents include thermally expandable graphite, acid ammonium, sodium carbonate, ammonium hydrogen carbonate, sodium hydrogen carbonate, ammonium nitrite, sodium borohydride, and monosodium citrate anhydrous.

Examples of the thermally decomposable organic foaming agents include azo compounds such as azodicarbonamide, azodicarboxylic acid metal salts (e.g., barium azodicarboxylate), and azobisisobutyronitrile; nitroso compounds such as N,N'-dinitrosopentamethylenetetramine; hydrazine derivatives such as hydrazodicarbonamide, 4,4'-oxybis (benzenesulfonylhydrazide), and toluenesulfonylhydrazide; and semicarbazide compounds such as toluenesulfonylsemicarbazide.

Examples of the physical foaming agent include vermiculite and thermally expandable particles having hydrocarbon encapsulated therein.

The fiber may be the same as or different from the fiber constituting the A layer.

The fiber preferably has an average fiber size of 2 µm or greater, more preferably 3 µm or greater, and preferably 30 µm or less, more preferably 26 µm or less.

The fiber may be a discontinuous fiber that is intermittently divided or may be a continuous fiber that is not divided.

When the fiber is discontinuous fiber, the fiber preferably has an average fiber length of 2 mm or greater, more preferably 4 mm or greater, and preferably 100 mm or less, more preferably 80 mm or less.

The fiber preferably has a specific gravity of 1.5 or greater, more preferably 1.7 or greater, still more preferably 2.0 or greater, and preferably 3.0 or less, more preferably 2.7 or less, still more preferably 2.6 or less.

The specific gravity can be measured with an electronic densimeter, for example.

The fiber may be in a fibrous form or a form of a sheet of woven fabric, knitted fabric, or non-woven fabric, for example.

When the fiber is in a sheet form, the fiber preferably has a weight per unit area of 100 g/m² or more, more preferably 350 g/m² or more, and preferably 1,000 g/m² or less, more preferably 650 g/m² or less.

When the fiber is in a sheet form, preferably 3 or more, more preferably 5 or more but preferably 15 or fewer, more preferably 10 or fewer layers of the fiber are laminated to ensure the strength.

The B layer may further include additives such as thermal stabilizers, lubricants, inorganic fillers, pigments, flame retardants, antioxidants, processing aids, ultraviolet absorbers, or light stabilizers, if necessary.

Examples of the additives include the above-described additives usable in the A layer.

The thickness of the B layer is preferably 0.2 mm or greater, more preferably 0.3 mm or greater, still more preferably 0.5 mm or greater and is preferably 10 mm or less, more preferably 7 mm or less, still more preferably 5 mm or less.

When the laminate includes two or more B layers, the "thickness of the B layer" means the total thickness of the B layers.

The proportion, by mass, of the B layer in the laminate is preferably 1/10 or greater, more preferably 2/10 or greater and is preferably 9/10 or less, more preferably 8/10 or less.

The proportion of the thickness of the B layer in the thickness of the laminate is preferably 1/10 or greater, more preferably 2/10 or greater and is preferably 9/10 or less, more preferably 8/10 or less.

The proportion of the thickness of the B layer to the thickness of the A layer (thickness of B layer/thickness of A layer) is preferably 1/10 or greater, more preferably 2/10 or greater and is preferably 9/10 or less, more preferably 8/10 or less.

The B layer has a stress at 20% compression of preferably 0.01 MPa or more, and preferably 5.00 MPa or less in a compression test.

The stress at 20% compression can be measured using a compression tester (for example, tensile compression testing machine, Model 5982, produced by INSTRON).

The laminate includes a total of three or more layers of the A layer and the B layer.

This structure advantageously enables protection of the B layer by the A layer and long-term maintenance of the laminate form.

The total number of the A layer and the B layer is preferably three or more and is preferably seven or less.

Examples of the form of the laminate include film, plate, sheet, cylinder, ring, frame, and box.

The laminate may have a structure starting from the A layer, i.e., A layer/B layer/A layer/..., and ending with the A layer or the B layer, or alternatively, a structure starting from the B layer, i.e., B layer/A layer/B layer/..., and ending with the A layer or the B layer, such as a three-layer structure of "A layer/B layer/A layer", a three-layer structure of "B layer/A layer/B layer", or a five-layer structure of "A layer/B layer/A layer/B layer/A layer".

In addition to the A layer and the B layer, the laminate may include a layer of a different component, including a thermal insulation material such as glass wool or an electrical insulation material such as a mica sheet.

The laminate has no flame penetration in two-minute exposure to burner flame.

The laminate with such a structure has high flame shielding performance. In particular, it is capable of blocking heat and flame transfer to adjacent battery cells to prevent chain explosion in the event of ignition or thermal runaway, when it is used as an inter-cell member for in-vehicle batteries.

The conditions in the exposure to burner flame are as follows: a measurement sample with a size of 150 mm in length × 150 mm in width is fixed to a jig such that the thickness direction of the sample is parallel to the ground, and the front face of the sample is exposed to burner flame having an outer flame temperature of 1,000°C ± 100°C with a distance of 0 to 10 mm between the sample and the outer flame for two minutes. In the case where the laminate has an asymmetric structure such as a structure of "A layer/B layer/A layer/B layer", the face on the A layer side is exposed to burner flame. The thickness of the measurement sample is not limited and may be 2 mm.

For example, the laminate with no flame penetration under the above-described conditions can be obtained by controlling any of the following: the selection of the resin constituting the A layer, in particular, using a chlorinated polyvinyl chloride resin; the degree of polymerization and/or degree of chlorination of the resin; the selection and the amounts of the structural units; the selection of the fiber; the ratio of the resin and the fiber added; the selection of the components in the B layer; the thickness of each layer; and the selection and the amounts of inorganic fillers.

The laminate is rated as V-0 or greater in a UL94 burning test.

The laminate with such a structure has high flame shielding performance, in particular, is capable of blocking heat and flame transfer to adjacent battery cells to prevent chain explosion in the event of ignition or thermal runaway, when it is used as an inter-cell member for in-vehicle batteries.

In the UL94 burning test, a subject is evaluated and classified into a grade of V-0, V-1, V-2, or non-compliant by a method in conformity with the UL 94 standard vertical burning test (V test).

For example, the laminate rated as V-0 or greater in a UL94 burning test can be obtained by controlling any of the following: the selection of the resin constituting the A layer, in particular, using a chlorinated polyvinyl chloride resin; the degree of polymerization and/or degree of chlorination of the resin; the selection and the amounts of the structural units; the selection of the fiber; the ratio of the resin and the fiber added; the selection of the components in the B layer; the thickness of each layer; and the selection and the amounts of inorganic fillers.

The temperature of the laminate on the unheated side in the two-minute exposure to burner flame is preferably 600°C or lower, more preferably 500°C or lower, still more preferably 400°C or lower.

When the temperature is within the range, the laminate can sufficiently exhibit heat shielding performance.

The lower limit is not limited. The temperature is preferably as low as possible.

Examples of the conditions for the exposure to burner flame include the conditions described above.

The temperature on the unheated side can be adjusted by controlling any of the following: the selection of the resin constituting the A layer, in particular, using a chlorinated polyvinyl chloride resin; the degree of polymerization and/or degree of chlorination of the resin; the selection and the amounts of the structural units; the selection of the fiber; the ratio of the resin and the fiber added; the selection of the components in the B layer; the thickness of each layer; and the selection and the amounts of inorganic fillers.

The laminate preferably has a difference between the temperatures on the heated side and the unheated side of 400°C or greater in the two-minute exposure to burner flame.

The laminate having the difference within the range can sufficiently exhibit heat shielding performance.

The temperature difference is more preferably 450°C or greater, still more preferably 500°C or greater. The lower limit is not limited. The temperature difference is preferably as small as possible.

Examples of the conditions for the exposure to burner flame include the conditions described above.

The temperature difference can be adjusted by controlling any of the following: the selection of the resin constituting the A layer, in particular, using a chlorinated polyvinyl chloride resin; the degree of polymerization and/or degree of chlorination of the resin; the selection and the amounts of the structural units; the selection of the fiber; the ratio of the resin and the fiber added; the selection of the components in the B layer; the thickness of each layer; and the selection and the amounts of inorganic fillers.

Preferably, the laminate before heating has a thermal conductivity of 0.05 W/mK or greater, more preferably 0.1 W/mK or greater, and preferably 0.5 W/mK or less, more preferably 0.4 W/mK or less.

The thermal conductivity can be measured in conformity with JIS A 1412-2, and can be measured using, for example, HC-074/200 (produced by EKO INSTRUMENTS CO., LTD.).

Preferably, the laminate after heating at 800°C for one minute has a thermal conductivity of 0.01 W/mK or greater, more preferably 0.05 W/mK or greater, and preferably 0.15 W/mK or less, more preferably 0.12 W/mK or less.

The laminate preferably has a rate of change in thermal conductivity of 0.1 or greater, more preferably 0.2 or greater, still more preferably 0.5 or greater, and preferably 50 or less after heating at 800°C for one minute, the rate of change in thermal conductivity being calculated by the following expression (1). (Rate of change in thermal conductivity) = [((Thermal conductivity before heating) - (Thermal conductivity after heating))2]1/2/(Thermal conductivity after heating)

The rate of change within the range is advantageous in that the heat-shielding performance can be increased without greatly increasing the thickness of the laminate before heating.

The rate of change is more preferably 30 or less, still more preferably 15 or less.

An exemplary heating method includes introducing a sample into a muffle furnace at 800°C and leaving the sample for one minute after the temperature inside the muffle furnace reaches 800°C again.

The laminate preferably has a bending modulus of 10 GPa or greater, more preferably 15 GPa or greater, and preferably 100 GPa or less, more preferably 50 GPa or less.

The bending modulus can be measured by a method in conformity with ASTM D-790.

The thickness of the laminate is preferably 0.3 mm or greater, more preferably 0.7 mm or greater and is preferably 30 mm or less, more preferably 20 mm or less, still more preferably 15 mm or less.

The ratio between the thicknesses of the laminate before and after the heating, which is specified by the following expression (2), is preferably 10% or higher, more preferably 20% or higher and is preferably 300% or lower, more preferably 200% or lower, still more preferably 100% or lower.

When the ratio is within the range, the strength of the laminate after combustion can be easily maintained. (Thickness ratio) = [(Thickness of laminate after heating)/(Thickness of laminate before heating)] × 100

For example, the laminate may be produced as follows. A composition containing the components constituting the A layer such as the resin and the fiber is produced and used to form the A layer. Subsequently, a sheet-form fiber as the B layer is prepared. These layers are laminated by thermal compression molding to form a laminate in which the layers are stacked in the order of A layer/B layer/A layer or alternatively in the order of B layer/A layer/B layer. A resin foam or an inorganic foam may be used as the B layer.

Examples of the method for forming the A layer include hand lay-up molding, spray-up molding, resin transfer molding, bag molding, injection molding, extrusion molding, and stamping molding.

Examples of the method for forming the B layer include calendering molding, extrusion molding, and injection molding.

Further, a different layer may be formed between the A layer and the B layer or as the outermost layer, for example.

The laminate excels in elasticity as well as in both heat shielding performance and flame shielding performance in combustion. Thus, it can suitably be used as a member of transportation machinery or a member of battery systems.

Examples of the transportation machinery include automobiles such as gasoline-powered vehicles, hybrid vehicles, electric vehicles, and fuel cell vehicles; motorcycles such as gasoline-powered motorcycles, hybrid motorcycles, and electric motorcycles; bicycles such as power assisted bicycles; railway vehicles; vessels; and aircraft.

Examples of the member of transportation machinery include mechanism members, interior members, exterior members, windowpanes, and light covers.

Examples of the mechanism members include cooling pipes, air bag covers, air ducts, and heater units.

Examples of the interior members include ceiling, instrument panels, console boxes, arm rests, seat belt buckles, switches, and door trims.

Examples of the exterior members include emblems, number plate housings, bumper cores, and under covers.

Examples of the battery systems include primary batteries such as nickel manganese batteries, lithium batteries, and zinc-air batteries; secondary batteries such as nickel hydrogen batteries, lithium-ion batteries, and lead storage batteries; solar cells such as silicon-based solar cells, dye-sensitized solar cells, and perovskite solar cells; and fuel cells such as solid polymer fuel cells, alkali fuel cells, phosphoric acid fuel cells, and solid oxide fuel cells.

Examples of the member of battery systems include inter-cell members for batteries, battery covers, battery cooling water jackets, hydrogen tank covers, connectors, and insulation sheets.

The laminate can particularly suitably be used as an inter-cell member for lithium-ion batteries. Moreover, the laminate can suitably be used as an inter-cell member for in-vehicle batteries because the laminate can reduce a strength decrease due to flame and heat generated by ignition inside a cell if the cell undergoes thermal runaway caused by an external impact such as a collision accident.

Specific examples of the inter-cell member include separators used between cells.

### - Advantageous Effects of Invention

The present invention can provide a laminate that excels in elasticity as well as in both heat shielding performance and flame shielding performance in combustion and, in particular, is capable of blocking heat and flame transfer to adjacent battery cells to prevent chain explosion in the event of ignition or thermal runaway, when it is used as an inter-cell member for in-vehicle batteries.

### DESCRIPTION OF EMBODIMENTS

The present invention is hereinafter described in more detail with reference to examples. The present invention should not be limited to these examples.

### (Example 1)

### (Production of A layer)

One hundred parts by mass of a resin and three parts by mass of a thermal stabilizer (produced by Nitto Kasei Co., Ltd., organotin thermal stabilizer "TVS#1380") were mixed with 400 parts by mass of tetrahydrofuran (THF, produced by FUJIFILM Wako Pure Chemical Corporation) to prepare a resin composition solution. The resin used was a chlorinated polyvinyl chloride resin (CPVC, produced by Tokuyama Sekisui Co., Ltd., average degree of polymerization: 500, chlorine content: 67.3% by mass, vinyl chloride unit content: 38.1 mol%, perchlorinated unit content: 49.3 mol%, different structural unit content: 12.6 mol%).

The average degree of polymerization of the CPVC was measured by a method in conformity with JIS K 6720-2:1999.

The chlorine content of the CPVC was measured by a method in conformity with JIS K 7229. Further, the molecular structure of the CPVC was analyzed by the NMR measurement method described in R. A. Komoroski, R. G. Parker, J. P. Shocker, Macromolecules, 1985, 18, 1257-1265 to determine the vinyl chloride unit content and the perchlorinated unit content.

The NMR measurement conditions were as follows.
Apparatus: FT-NMRJEOLJNM-AL-300
Measured nuclei: 13C (proton complete decoupling)
Pulse width: 90°
PD: 2.4 sec
Solvent: o-dichlorobenzene:deuterated benzene (C5D5) = 3:1
Sample concentration: about 20%
Temperature: 110°C
Reference material: central signal for benzene set to 128 ppm
Number of scans: 20,000

Subsequently, a sheet-form glass fiber ("MC450A" produced by Nitto Boseki Co., Ltd., average fiber size: 7 µm, average fiber length: 50 mm, weight per unit area: 450 g/m²) as a fiber was impregnated with the resin solution by a hand lay-up method. This process was repeated three times to stack three glass fiber layers. Then, the THF was evaporated by drying with a drier, whereby a 0.7 mm-thick sheet was obtained.

The obtained sheet was heat-pressed for one minute at 200°C and a surface pressure of 20 MPa to obtain an A layer. The A layer had a thickness of 0.3 mm. The amount of the fiber relative to 100 parts by mass of the resin was 50 parts by mass. The resin composition content of the A layer was 60% by volume.

The average fiber size of the fiber was determined by calculating the average of the fiber sizes of ten random points in an image captured using a scanning electron microscope (SEM). The average fiber length of the fiber was calculated from the average of 20 random samples measured using an SEM. The weight per unit area of the fiber was calculated by cutting the sheet-form fiber to a size of 10 cm × 10 cm and measuring the weight (g) per m².

The chlorinated polyvinyl chloride resin was subjected to measurement of the average degree of polymerization in conformity with JIS K 6720-2:1999 and measurement of the chlorine content in conformity with JIS K 7229.

### (B layer)

The B layer used was a glass fiber nonwoven fabric ("SWM-4" produced by Chubu Kogyo Co., Ltd., thickness: 1.4 mm, average fiber size: 7 µm, average fiber length: 150 mm, weight per unit area: 120 g/m²).

### (Production of laminate)

The A layer and the B layer were stacked in the order of A layer-B layer-A layer and then heat-pressed with a pressing machine at 0.5 MPa for two minutes, thereby obtaining a 2 mm-thick laminate.

### (Example 2)

A 2 mm-thick laminate having a structure of A layer-B layer-A layer was obtained as in Example 1, except that a sheet-form carbon fiber ("T-700" produced by Toray Industries, Inc., average fiber size: 10 µm, continuous fiber, weight per unit area: 220 g/m²) was used instead of the sheet-form glass fiber in (Production of A layer).

### (Example 3)

A 2 mm-thick laminate having a structure of A layer-B layer-A layer was obtained as in Example 1, except that a polyester-based polyurethane foam ("Moltopren SC" produced by INOAC CORPORATION, thickness: 1.4 mm) was used as the B layer instead of the glass fiber nonwoven fabric.

### (Example 4)

A 3.7 mm-thick laminate having a structure of A layer-B layer-A layer-B layer-A layer was obtained as in Example 1, except that the A layer and the B layer were stacked in the order of A layer-B layer-A layer-B layer-A layer in (Production of laminate).

### (Example 5)

A 3.1 mm-thick laminate having a structure of B layer-A layer-B layer was obtained as in Example 1, except that the A layer and the B layer were stacked in the order of B layer-A layer-B layer in (Production of laminate).

### (Example 6)

A 2 mm-thick laminate having a structure of A layer-B layer-A layer was obtained as in Example 1, except that a polyether-based polyurethane foam ("Color Foam ECS" produced by INOAC CORPORATION, thickness: 1.4 mm) was used as the B layer instead of the glass fiber nonwoven fabric.

### (Example 7)

A 2 mm-thick laminate having a structure of A layer-B layer-A layer was obtained as in Example 1, except that a polyethylene foam ("FOAM ACE SN-500" produced by Furukawa Electric Co., Ltd., thickness: 1.4 mm) was used as the B layer instead of the glass fiber nonwoven fabric.

### (Example 8)

A 2 mm-thick laminate having a structure of A layer-B layer-A layer was obtained as in Example 1, except that a sheet-form carbon fiber ("T-700" produced by Toray Industries, Inc., thickness: 1.4 mm, average fiber size: 10 µm, continuous fiber, weight per unit area: 220 g/m²) was used as the B layer instead of the glass fiber nonwoven fabric.

### (Example 9)

A 0.5 mm-thick A layer was obtained as in Example 1, except that impregnation of the sheet-form glass fiber with the resin composition solution was repeated four times to stack four layers of glass fiber and then heat-pressed at 210°C and a surface pressure of 20 MPa for one minute in (Production of A layer).

The B layer used was a sheet-form carbon fiber ("T-700" produced by Toray Industries, Inc., thickness: 1 mm, average fiber size: 10 µm, continuous fiber, weight per unit area: 220 g/m²) instead of the glass nonwoven fabric.

A 2 mm-thick laminate having a structure of A layer-B layer-A layer was obtained as in Example 1 except for the above-described conditions.

### (Example 10)

A 0.8 mm-thick A layer was obtained as in Example 1, except that impregnation of the sheet-form glass fiber with the resin composition solution was repeated four times to stack four layers of glass fiber and then heat-pressed at 210°C and a surface pressure of 15 MPa for one minute in (Production of A layer).

The B layer used was a glass fiber nonwoven fabric ("SWM-4" produced by Chubu Kogyo Co., Ltd., thickness: 0.4 mm, average fiber size: 7 µm, average fiber length: 150 mm, weight per unit area: 120 g/m²).

A 2 mm-thick laminate having a structure of A layer-B layer-A layer was obtained as in Example 1 except for the above-described conditions.

### (Example 11)

A 2 mm-thick laminate having a structure of A layer-B layer-A layer was obtained as in Example 1, except that the A layer was produced by stacking one layer of sheet-form glass fiber impregnated with the resin solution and two layers of sheet-form glass fiber without impregnation such that the amount of the fiber in the A layer was 75% by volume in (Production of A layer).

### (Example 12)

A 2 mm-thick laminate having a structure of A layer-B layer-A layer was obtained as in Example 1, except that the A layer was produced by stacking two layers of sheet-form glass fiber impregnated with the resin solution and one layer of sheet-form glass fiber without impregnation such that the amount of the fiber in the A layer was 55% by volume in (Production of A layer).

### (Example 13)

A 2 mm-thick laminate having a structure of A layer-B layer-A layer was obtained as in Example 1, except that a polyvinyl chloride resin (PVC produced by Tokuyama Sekisui Co., Ltd., average degree of polymerization: 500) was used as the resin in (Production of A layer).

### (Example 14)

A 2 mm-thick laminate having a structure of A layer-B layer-A layer was obtained as in Example 1, except that a polyamide ("A1030BRT" produced by Unitika Ltd.) was used as the resin and no thermal stabilizer was added to prepare a resin composition solution in (Production of A layer).

### (Example 15)

A 2 mm-thick laminate having a structure of A layer-B layer-A layer was obtained as in Example 1, except that 30 parts by mass of aluminum hydroxide was further added to prepare a resin composition solution in (Production of A layer).

### (Example 16)

A 2 mm-thick laminate having a structure of A layer-B layer-A layer was obtained as in Example 1, except that 150 parts by mass of aluminum hydroxide was further added to prepare a resin composition solution in (Production of A layer).

### (Example 17)

A 2 mm-thick laminate having a structure of A layer-B layer-A layer was obtained as in Example 1, except that a chlorinated polyvinyl chloride resin (CPVC produced by Tokuyama Sekisui Co., Ltd., average degree of polymerization: 500, chlorine content: 72.0% by mass, vinyl chloride unit content: 21.7 mol%, perchlorinated unit content: 54.1 mol%, different structural unit content: 24.2 mol%) was used as the resin in (Production of A layer).

### (Example 18)

A 2 mm-thick laminate having a structure of A layer-B layer-A layer was obtained as in Example 1, except that 20 parts by mass of aluminum hydroxide was further added to prepare a resin composition solution in (Production of A layer).

### (Comparative Example 1)

A mica ("D461" produced by Okabe Mica Co., Ltd., plate form, thickness: 2 mm) was used.

### (Comparative Example 2)

A 0.1 mm-thick A layer was obtained as in Example 1, except that impregnation of the sheet-form glass fiber with the resin composition solution was performed once, and one layer of the sheet-form glass fiber was heat-pressed at 210°C and a surface pressure of 20 MPa for one minute in (Production of A layer).

The B layer used was a polyester-based polyurethane foam ("Moltopren SC" produced by INOAC CORPORATION, thickness: 1.8 mm) instead of the glass nonwoven fabric.

A 2 mm-thick laminate having a structure of A layer-B layer-A layer was obtained as in Example 1 except for the above-described conditions.

### (Comparative Example 3)

A 2 mm-thick laminate having a structure of A layer-B layer-A layer was obtained as in Comparative Example 2, except that a polyethylene foam ("FOAM ACE SN-500" produced by Furukawa Electric Co., Ltd., thickness: 1.8 mm) was used as the B layer instead of the polyester-based polyurethane foam.

### (Comparative Example 4)

A 1.7 mm-thick laminate having a structure of A layer-B layer was obtained as in Example 1, except that the A layer and the B layer were stacked in the order of A layer-B layer in (Production of A layer).

### (Evaluation)

The B layers and the laminates obtained in the examples and comparative examples were subjected to the evaluations below. Table 1 shows the results.

### (1) Stress at 20% compression of B layer

The stresses at 20% compression of the B layers and the mica layer in Comparative Example 1 were measured by the following method.

Specifically, a sample with a size of 50 mm × 50 mm × t mm in thickness was prepared. The sample was placed on a compression tester, and a position at the thickness t mm measured with a micrometer was set as position 0. The sample was compressed at a compression rate of 0.5 mm/min. The load when the sample was compressed by 20% of the original thickness of the sample (t × 0.2 mm) was measured. The load was divided by the area (250 mm²) of the sample to obtain a stress. The compression tester used was a tensile compression testing machine, Model 5982, produced by INSTRON.

### (2) Thermal conductivity of B layer

The thermal conductivities of the B layers and the mica layer in Comparative Example 1 were measured using HC-074/200 (produced by EKO INSTRUMENTS CO., LTD.) by a method in conformity with JIS A 1412-2.

### (3) Flame penetration

A measurement sample with a size of 150 mm in length × 150 mm in width was prepared from each of the laminates and the mica layer in Comparative Example 1. The sample was fixed to a jig such that the thickness direction of the sample was parallel to the ground, and the front face of the sample was exposed to burner flame having an outer flame temperature of 980°C with a distance of 5 mm between the sample and the outer flame for two minutes. Thereafter, the presence or absence of through holes in the laminate was observed. Moreover, the temperatures on the heated side and the unheated side after the two-minute exposure were measured with a thermocouple, and a difference between the temperatures was calculated. In Comparative Example 4, the laminate was exposed to burner flame from the A layer side.

### (4) UL94 burning test

The laminates and the mica layer in Comparative Example 1 were subjected to a burning test in conformity with the UL 94 standard V test.

### (5) Stress at 20% compression of laminate

The stresses at 20% compression of the laminates and the mica layer in Comparative Example 1 were measured as in (1) Stress at 20% compression of B layer described above.

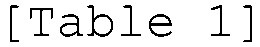

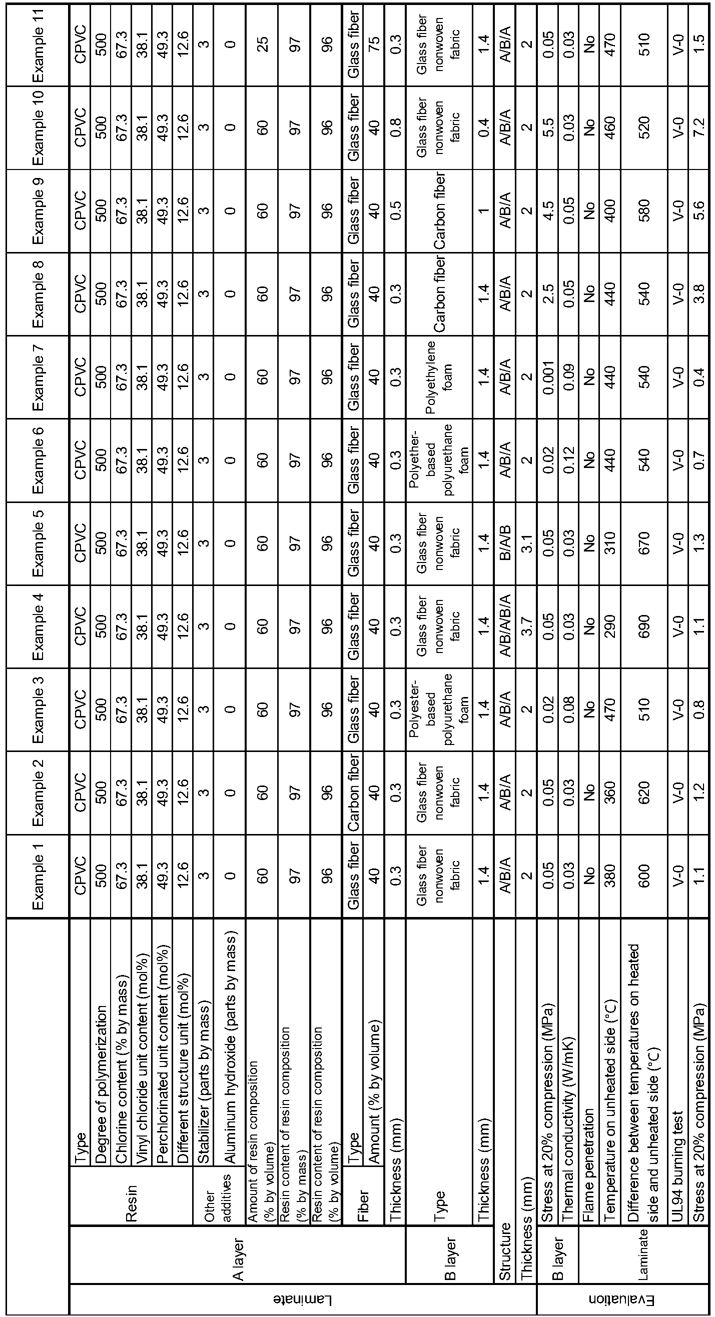

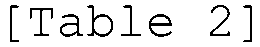

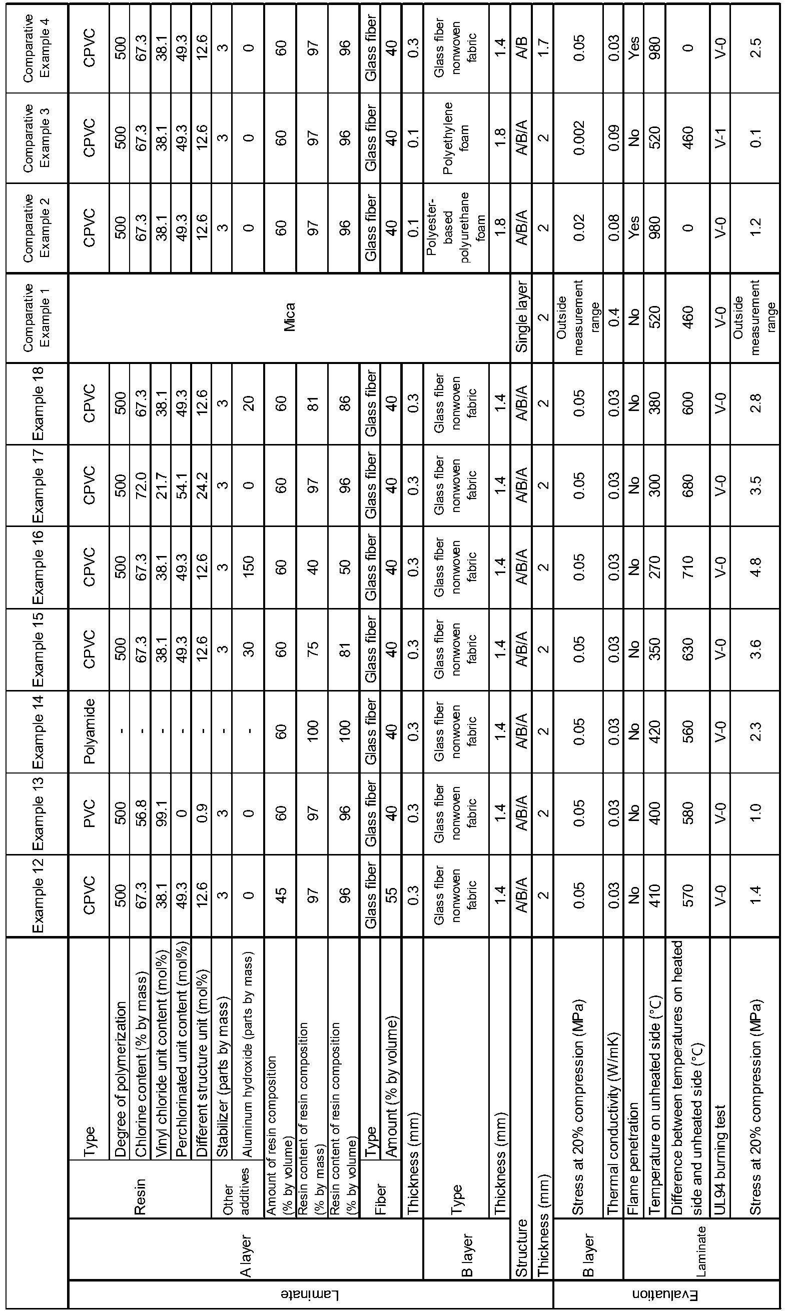

### INDUSTRIAL APPLICABILITY

The present invention can provide a laminate that excels in elasticity as well as in both heat shielding performance and flame shielding performance in combustion and, in particular, is capable of blocking heat and flame transfer to adjacent battery cells to prevent chain explosion in the event of ignition or thermal runaway, when it is used as an inter-cell member for in-vehicle batteries.

## Claims

1. A laminate, comprising:
an A layer including a resin and a fiber; and
a B layer,
the laminate including a total of three or more layers of the A layer and the B layer,
the laminate having no flame penetration in two-minute exposure to burner flame and being rated as V-0 or greater in a UL94 burning test.

2. The laminate according to claim 1,
wherein the B layer has a stress at 20% compression of 0.01 MPa or more and 5.00 MPa or less in a compression test.

3. The laminate according to claim 1 or 2,
wherein the B layer has a thermal conductivity of 0.1 W/mK or less as measured in conformity with JIS A 1412-2.

4. The laminate according to any one of claims 1 to 3,
wherein the B layer includes at least one selected from the group consisting of resin foams, inorganic foams, and fibers.

5. The laminate according to any one of claims 1 to 4,
wherein the resin constituting the A layer is a thermoplastic resin.

6. The laminate according to claim 5,
wherein the thermoplastic resin includes at least one selected from the group consisting of chlorinated polyvinyl chloride resins and polyvinyl chloride resins.

7. The laminate according to any one of claims 1 to 6,
wherein the A layer further includes an inorganic filler.

8. The laminate according to claim 7,
wherein the inorganic filler is aluminum hydroxide.
